# EUROPEAN PATENT APPLICATION

(11) **EP 2 285 125 A2**
(43) Date of publication of application: **16.02.2011**
(21) Application number: 10171467.3
(22) Date of filing: 30.07.2010
(51) Int. Cl.: H04N 13/00

(54) **Display device, display method and computer program**

(30) Priority: 11.08.2009 JP 2009186789
(71) Applicant: Sony Corporation, Tokyo (JP)
(72) Inventor: Hata, Ryuhei, TOKYO (JP)
(74) Representative: Thévenet, Jean-Bruno

(57) **Abstract**

There is provided a display device including a first measurement portion (121a) that measures information relating to luminance of a first image signal, and outputs a first measurement result, a second measurement portion (121b) that measures information relating to luminance of a second image signal, and outputs a second measurement result, a comparison portion (122) that compares the first measurement result with the second measurement result and outputs differential data, a correction amount determination portion (123) that determines, based on the differential data, a correction amount for at least one of the first image signal and the second image signal and a correction portion that corrects, based on the correction amount, the luminance of at least one of the first image signal and the second image signal.

## Description

### BACKGROUND OF THE INVENTION

### Field of the Invention

The present invention relates to a display device, a display method and a computer program.

### Description of the Related Art

Display devices exist in which an image displayed on a screen is perceived by a viewer as a stereoscopic three-dimensional image. In order to cause the viewer to perceive the image as a stereoscopic three-dimensional image, it is necessary to display the image on the screen using a different display method than a normal display method. One example of such a display method is a technique in which the viewer is caused to perceive an image as a stereoscopic image by changing a polarization state of an image for the right eye and of an image for the left eye (refer to Japanese Patent Application Publication No. JP-A-10-63199, for example). By changing the polarization state of the image for the right eye and the image for the left eye, and by the viewer wearing glasses with the polarization state changed on the left and right (which thus enable the viewer to view the image for the right eye using his or her right eye and to view the image for the left eye using his or her left eye), an image displayed on the screen can be perceived as a stereoscopic three-dimensional image.

In order to cause the viewer to perceive a stereoscopic three-dimensional image, normally, two cameras are used to capture an image for the right eye and an image for the left eye respectively, and the captured images are displayed on a display device. When the two cameras are used to capture images for a three-dimensional image, it is necessary to produce the images such that there is no difference in luminance and color the left and right images, by unifying settings of the two cameras, such as a lens type, an aperture, and imaging element characteristics.

### SUMMARY OF THE INVENTION

However, if the settings of the two cameras are different and differences in luminance and color are generated the captured two types of images, flicker appears on the display device that causes the viewer to perceive a three-dimensional image using a system that alternately displays the left and right images. As a result, adverse effects are generated, such as deterioration in image quality and deterioration in viewing quality.

In order to prevent the flicker, a method is disclosed in which focuses, apertures, and imaging portion gains are synchronized between the two cameras (refer to Japanese Patent Application Publication No. JP-A-8-242468, for example). However, with this method, special cameras are required and costs are increased. Further, if three-dimensional images that are actually broadcast are analyzed, in some cases, there is a luminance difference between right and left images, and the luminance and contrast of the two cameras are not adjusted. For example, there is a case in which an approximately four percent difference exists with respect to an average luminance of the whole screen.

In light of the foregoing, it is desirable to provide a novel and improved display device, display method and computer program that are capable of suppressing occurrence of flicker during three-dimensional image display, when there is a difference between an image for a right eye and an image for a left eye, by correcting the difference between the image for the right eye and the image for the left eye.

According to an embodiment of the present invention, there is provided a display device including a first measurement portion that measures information relating to luminance of a first image signal, and outputs a first measurement result, a second measurement portion that measures information relating to luminance of a second image signal, and outputs a second measurement result, a comparison portion that compares the first measurement result with the second measurement result and outputs differential data, a correction amount determination portion that determines, based on the differential data, a correction amount for at least one of the first image signal and the second image signal and a correction portion that corrects, based on the correction amount, the luminance of at least one of the first image signal and the second image signal.

The first measurement portion may additionally measure information relating to of the first image signal and outputs the first measurement result, and the second measurement portion may additionally measure information relating to color of the second image signal and outputs the second measurement result.

The first measurement portion and the second measurement portion may respectively divide the first image signal and the second image signal into a plurality of regions, and perform measurement with respect to each of the regions.

The correction amount determination portion may determine a correction amount only for the region in which the first measurement result and the second measurement result are equal to or more than a threshold value determined in advance.

The correction amount determination portion may determine a correction amount only for a region corresponding to a central section in the plurality of regions. The correction amount determination portion may further determine a correction amount only for the region in which the first measurement result and the second measurement result are equal to or more than a threshold value determined in advance.

The comparison portion may output, as differential data, a sum of squared differences between the first measurement result and the second measurement result.

The correction amount determination portion may determine a correction amount in accordance with content of an image displayed by the first image signal and the second image signal.

The display device may further include a display portion that displays a three-dimensional image based on the first image signal and the second image signal that have been corrected.

According to another embodiment of the present invention, there is provided a display method including the steps of measuring information relating to luminance of a first image signal, and outputting a first measurement result, measuring information relating to luminance of a second image signal, and outputting a second measurement result, comparing the first measurement result with the second measurement result and outputting differential data, determining, based on the differential data, a correction amount for at least one of the first image signal and the second image signal and correcting, based on the correction amount, the luminance of at least one of the first image signal and the second image signal.

According to another embodiment of the present invention, there is provided a computer program including instructions that command a computer to perform the steps of measuring information relating to luminance of a first image signal, and outputting a first measurement result, measuring information relating to luminance of a second image signal, and outputting a second measurement result, comparing the first measurement result with the second measurement result and outputting differential data, determining, based on the differential data, a correction amount for at least one of the first image signal and the second image signal and correcting, based on the correction amount, the luminance of at least one of the first image signal and the second image signal.

According to the embodiments of the present invention described above, it is possible to provide a novel and improved display device, display method and computer program that are capable of suppressing occurrence of flicker during three-dimensional image display, when there is a difference between an image for a right eye and an image for a left eye, by correcting the difference between the image for the right eye and the image for the left eye.

### BRIEF DESCRIPTION OF THE DRAWINGS

FIG. 1 is an explanatory diagram showing the outer appearance of a display device 100 according to an embodiment of the present invention;
FIG. 2 is an explanatory diagram showing the functional structure of the display device 100 according to the embodiment of the present invention;
FIG. 3 is an explanatory diagram showing a video signal control portion 120;
FIG. 4 is an explanatory diagram showing an example in which an image is divided into a plurality of blocks when a correction amount is determined;
FIG. 5 is an explanatory diagram showing the structure of a comparison portion 122 that is included in the video signal control portion 120;
FIG. 6 is a flowchart showing an image correction method by the display device 100 according to the embodiment of the present invention;
FIG. 7 is a flowchart showing an image correction method by the display device 100 according to the embodiment of the present invention;
FIG. 8 is an explanatory diagram showing the structure of a video signal control portion 220 that is a modified example of the video signal control portion 120 according to the embodiment of the present invention; and
FIG. 9 is a flowchart showing an image correction method by the video signal control portion 220 according to the modified example of the embodiment of the present invention.

### DETAILED DESCRIPTION OF THE EMBODIMENT(S)

Hereinafter, preferred embodiments of the present invention will be described in detail with reference to the appended drawings. Note that, in this specification and the appended drawings, structural elements that have substantially the same function and structure are denoted with the same reference numerals, and repeated explanation of these structural elements is omitted.

An explanation will be given in the following order.
1. Embodiment of present invention
1-1. Structure of display device according to embodiment of present invention
1-2. Functional structure of display device according to embodiment of present invention
1-3. Structure of video signal control portion
1-4. Structure of comparison portion
1-5. Method of image correction
2. Modified example of embodiment of present invention
2-1. Structure of video signal control portion
2-2. Method of image correction
3. Conclusion

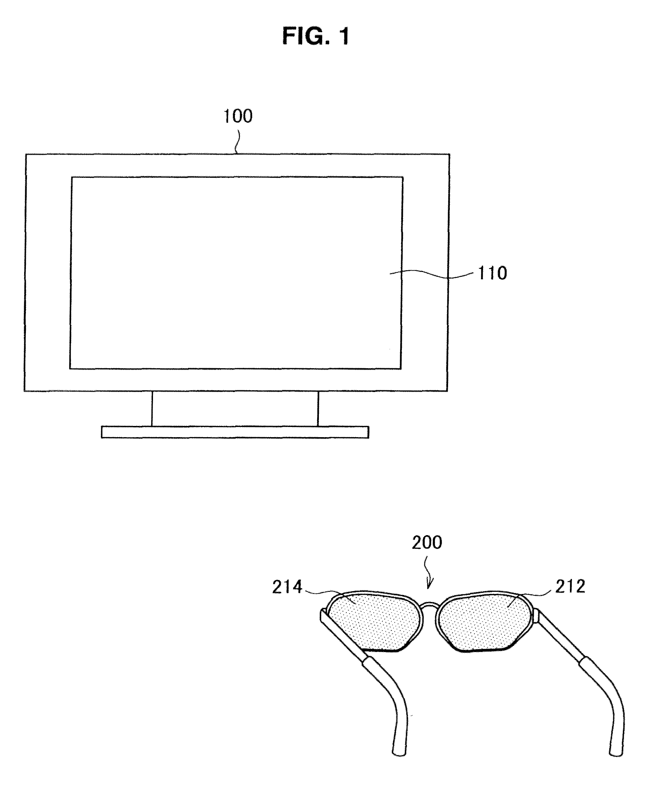

1. Embodiment of present invention
1-1. Structure of display device according to embodiment of present invention
Hereinafter, the structure of a display device 100 according to the embodiment of the present invention will be explained. First, the outer appearance of the display device 100 according to the embodiment of the present invention will be described. FIG. 1 is an explanatory diagram showing the outer appearance of the display device 100 according to the embodiment of the present invention. Additionally, FIG. 1 also shows shutter glasses 200, which are used to cause a viewer to perceive an image displayed on the display device 100 as a stereoscopic image.

The display device 100 shown in FIG. 1 is provided with an image display portion 110 that displays images. The display device 100 does not only displays normal images on the image display portion 110, but can also display three-dimensional images on the image display portion 110 that are perceived by the viewer as stereoscopic images.

The structure of the image display portion 110 will be described in more detail later. As a simple description here, the image display portion 110 includes a light source, a liquid crystal panel and a pair of polarizing plates that sandwich the liquid crystal panel. Light from the light source is polarized in a predetermined direction by passing through the liquid crystal panel and the polarizing plates.

The shutter glasses 200 includes a right eye image transmission portion 212 and a left eye image transmission portion 214 which are configured from liquid crystal shutters, for example. The shutter glasses 200 performs opening and closing operations for the right eye image transmission portion 212 and the left eye image transmission portion 214 in accordance with an signal output from the display device 100. The viewer can perceive the image displayed on the image display portion 110 as stereoscopic images by seeing the light output from the image display portion 110 through the right eye image transmission portion 212 and the left eye image transmission portion 214 of the shutter glasses 200.

On the other hand, when a normal image is displayed on the image display portion 110, by seeing the light output from the image display portion 110 as it is, the viewer can perceive the image as the normal image.

Note that, in FIG. 1, the display device 100 is portrayed as a television receiver, but the present invention is naturally not limited to this example of the form of the display device 100. The display device 100 according to the present invention may be, for example, a monitor that is used when connected to an electronic appliance such as a personal computer or the like, or it may be a mobile game console, a mobile telephone, or a portable music playback device and so on.

The outer appearance of the display device 100 according to the embodiment of the present invention is described above. Next, the functional structure of the display device 100 according to the embodiment of the present invention will be explained.

### 1-2. Functional structure of display device according to embodiment of present invention

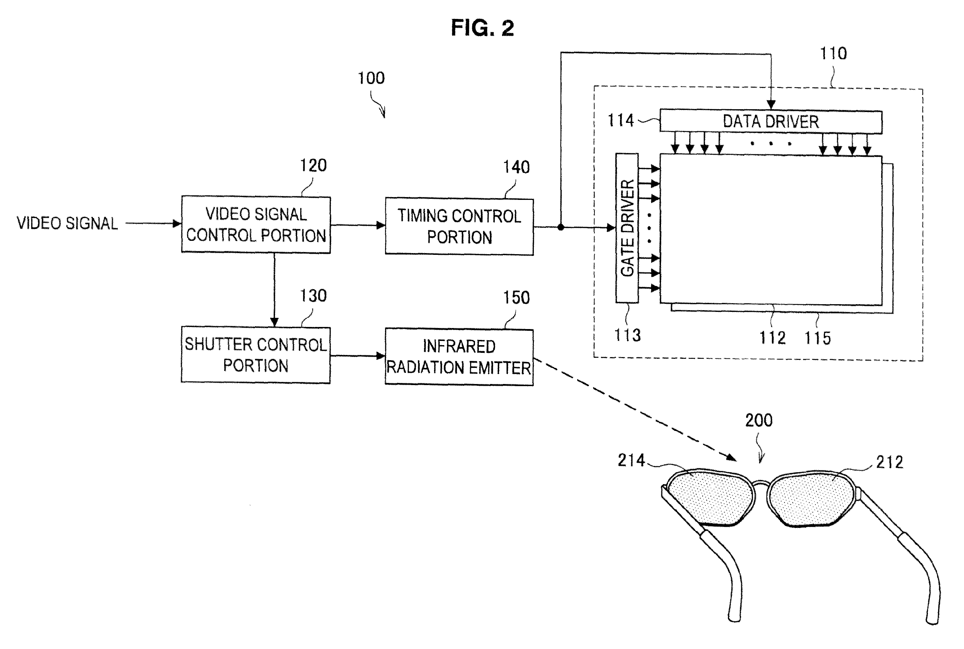

FIG. 2 is an explanatory diagram showing the functional structure of the display device 100 according to the embodiment of the present invention. Hereinafter, the functional structure of the display device 100 according to the embodiment of the present invention will be explained with reference to FIG. 2.

As shown in FIG. 2, the display device 100 according to the embodiment of the present invention includes the image display portion 110, a video signal control portion 120, a shutter control portion 130, a timing control portion 140 and an infrared radiation emitter 150.

The image display portion 110 displays images in the manner described above, and when a signal is applied from an external source, display of images is performed in accordance with the applied signal. The image display portion 110 includes a display panel 112, a gate driver 113, a data driver 114 and a back light 115.

The display panel 112 displays images in accordance with the signal applied from an external source. The display panel 112 displays images by sequentially scanning a plurality of scanning lines. Liquid crystal molecules having a predetermined orientation are filled in a space between transparent plates, made of glass or the like, of the display panel 112. A drive system of the display panel 112 may be a twisted nematic (TN) system, a vertical alignment (VA) system, or an in-place-switching (IPS) system. In the following explanation, the drive system of the display panel 112 is the TN system, unless otherwise specified, but it goes without saying that the present invention is not limited to this example. Note that the display panes 112 according to the present embodiment is a display panel that can rewrite the screen at a high-speed frame rate (240 Hz, for example). In the present embodiment, an image for the right eye and an image for the left eye are displayed alternately on the display panel 112 at a predetermined timing, thereby causing the viewer to perceive a stereoscopic image.

The gate driver 113 is a driver that drives a gate bus line (not shown in the figures) of the display panel 112. A signal is transmitted from the timing control portion 140 to the gate driver 113, and the gate driver 113 outputs a signal to the gate bus line in accordance with the signal transmitted from the timing control portion 140.

The data driver 114 is a driver that generates a signal that is applied to a data line (not shown in the figures) of the display panel 112. A signal is transmitted from the timing control portion 140 to the data driver 114. The data driver 114 generates a signal to be applied to the data line, in accordance with the signal transmitted from the timing control portion 140, and outputs the generated signal.

The backlight 115 is provided on the furthermost side of the image display portion 110 as seen from the side of the viewer. When an image is displayed on the image display portion 110, white light that is not polarized (unpolarized light) is output from the backlight 115 to the display panel 112 positioned on the side of the viewer. The backlight 115 may use a light-emitting diode, for example, or may use a cold cathode tube. Note that the backlight 115 shown in FIG. 2 is a surface light source, but the present invention is not limited to this form of light source. For example, the light source may be arranged around the peripheral edges of the display panel 112, and may output light to the display panel 112 by diffusing the light from the light source using a diffuser panel etc. Alternatively, for example, a point light source and a condenser lens may be used in combination in place of the surface light source.

When the video signal control portion 120 receives a video signal from an external source, the video signal control portion 120 performs various types of signal processing on the received video signal such that it is suitable for three-dimensional image display on the image display portion 110 and outputs the processed signal. The video signal on which signal processing has been performed by the video signal control portion 120 is transmitted to the timing control portion 140. Further, when the video signal control portion 120 performs signal processing, it transmits a predetermined signal to the shutter control portion 130 in accordance with the signal processing. The signal processing by the video signal control portion 120 is, for example, as described below.

When a video signal to display the image for the right eye on the image display portion 110 (a right eye video signal) and a video signal to display the image for the left eye on the image display portion 110 (a left eye video signal) are received by the video signal control portion 120, the video signal control portion 120 generates, from the two received video signals, a video signal for a three-dimensional image. In the present embodiment, the video signal control portion 120 generates, from the received right eye video signal and the left eye video signal, video signals to display images on the display panel 112 in the following order: image for the right eye → image for the right eye → image for the left eye → image for the left eye → image for the right eye → image for the right eye → and so on.

If there is a difference in color between the image for the right eye and the image for the left eye, the video signal control portion 120 performs a color correction processing which eliminates the difference to unify the color The configuration of the video signal control portion 120 and the color correction processing will be explained later.

The shutter control portion 130 receives the predetermined signal that is generated in accordance with the signal processing by the video signal control portion 120, and generates a shutter control signal that controls shutter operation of the shutter glasses 200 in accordance with the predetermined signal. The shutter glasses 200 perform opening and closing operations of the right eye image transmission portion 212 and the left eye image transmission portion 214, based on the shutter control signal that is generated by the shutter control portion 130 and output from the infrared radiation emitter 150.

In accordance with the signal transmitted from the video signal control portion 120, the timing control portion 140 generates a pulse signal that is used to operate the gate driver 113 and the data driver 114. When the pulse signal is generated by the timing control portion 140, and the gate driver 113 and the data driver 114 receive the pulse signal generated by the timing control portion 140, an image corresponding to the signal transmitted from the video signal control portion 120 is displayed on the display panel 112.

Further, the timing control portion 140 performs predetermined signal processing when a pulse signal is generated that is used for operations of the gate driver 113 thy drives 114. The timing control portion 140 is an example of a drive compensation portion of the present invention. By the predetermined signal processing performed by the timing control portion 140, an improvement in crosstalk becomes during a period in which shutters of the shutter glasses 200 are open. The predetermined signal processing performed by the timing control portion 140 will be described later in more detail.

The functional structure of the display device 100 according to the embodiment of the present invention is described above with reference to FIG. 2. Next, the structure of the video signal control portion 120 according to the embodiment of the present invention will be described.

### 1-3. Structure of video signal control portion

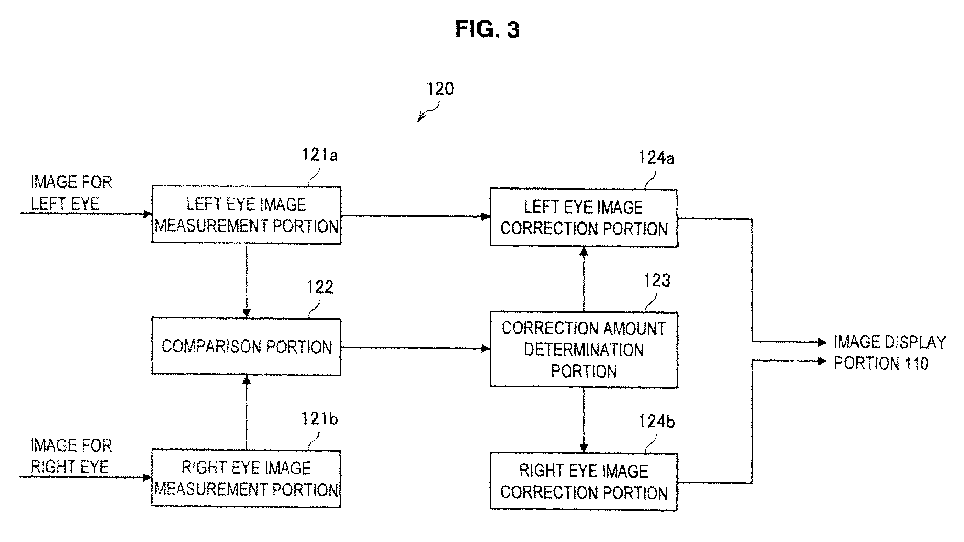

FIG. 3 is an explanatory diagram showing the video signal control portion 120 that is included in the display device 100 according to the embodiment of the present invention. Hereinafter, the structure of the video signal control portion 120 according to the embodiment of the present invention will be described with reference to FIG. 3.

As shown in FIG. 3, the video signal control portion 120 included in the display device 100 according to the embodiment of the present invention has a left eye image measurement portion 121a, a right eye image measurement portion 121b, a comparison portion 122, a correction amount determination portion 123, a left eye image correction portion 124a, and a right eye image correction portion 124b.

The left eye image measurement portion 121a measures a color difference (Cb, Cr) average, a color difference (Cb, Cr) variance and a hue histogram, with respect to a left eye image signal. Information of the color (cub, Cr) average, the color difference (Cb, Cr) variance and the hue histogram measured by the left eye image measurement portion 121a is transmitted to the comparison portion 122. Further, the left eye image signal (original image signal) used for the measurement is transmitted from the left eye image measurement portion 121a to the left eye image correction portion 124a.

Similarly to the left eye image measurement portion 121a, the right eye image measurement portion 121b measures a color difference (Cb, Cr) overage, a color difference (Cb, Cr) variance and a hue histogram, with respect to a right eye image signal. Information of the color difference (Cb, Cr) average, the color difference (Cb, Cr) variance and the hue histogram measured by the right eye image measurement portion 121b is transmitted to the comparison portion 122. Further, the right eye image signal (original image signal) used for the measurement is transmitted from the right eye measurement portion 121b to the right eye image correction portion 124b.

The comparison portion 122 compares the color difference (Cb, Cr) average, the color difference (Cb, Cr) variance and the hue histogram measured by the left eye image measurement portion 121a with the color difference (Cb, Cr) average, the color difference (Cb, Cr) variance and the hue histogram measured by the right eye image measurement portion 121b, and thereby generates differential data between the left eye image signal and the right eye image signal. The differential data generated by the comparison portion 122 is transmitted to the correction amount determination portion 123.

The correction amount determination portion 123 determines a correction amount using the differential data that is transmitted from the comparison portion 122 and that is generated as a result of comparing the color difference (Cb, Cr) average, the color difference (Cb, Cr) variance and the hue histogram measured by the left eye image measurement portion 121a with the color difference (Cb, Cr) average, the color difference (Cb, Cr) variance and the hue histogram measured by the right eye image measurement portion 121b. When the correction amount determination portion 123 determines the correction amount, the correction amount determination portion 123 may determine it by calculating the correction amount from the differential data, may determine it by referring to a lookup table from the differential data, or may determine it using another technique. Information of the correction amount determined by the correction amount determination portion 123 is transmitted to the left eye image correction portion 124a and the right eye image correction portion 124b.

The correction amount determination portion 123 may obtain the correction amount from a measurement result of the whole image, for example, or may obtain the correction amount by dividing the image into a plurality of blocks and weighting the value of a particular block. When the correction amount its obtained by dividing the image into the plurality of blocks, taking account of the fact that an object of interest in the image receives light differently on the left and right sides, attention is focused on a background section where difference is essentially small. It is assumed that a difference of a background region indicates a left-right difference of the whole image, and the correction amount determination portion 123 determines the correction amount such that the left-right difference of the background region becomes small. Luminance variance is used to determine whether or not a particular region is the background region. Of the image, a region with a small variance or a region with a value that is smaller than a threshold value may be determined as the background region. Luminance data of the image may be used to determine the background region.

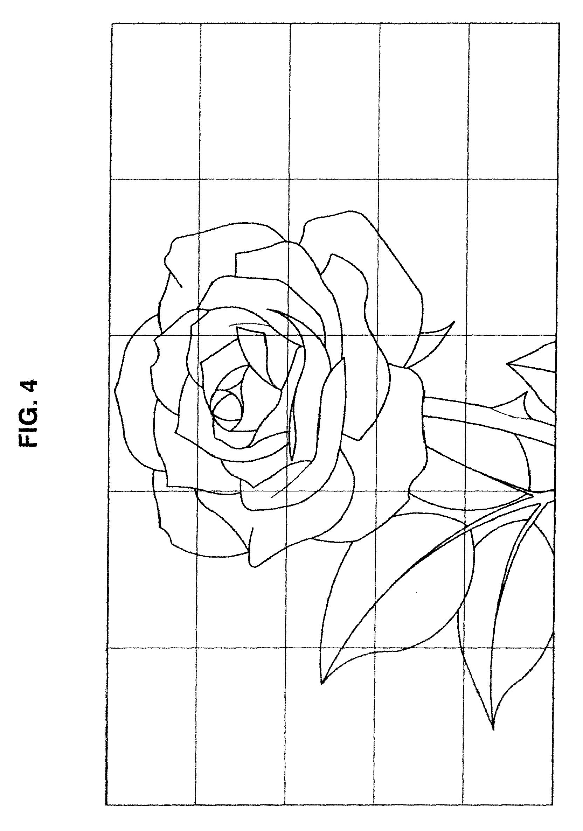

FIG. 4 is an explanatory diagram showing an example in which an image is divided into a plurality of blocks when a correction amount is determined by the correction amount determination portion 123. In the example shown in FIG. 4, one image is divided into five vertical blocks and five horizontal blocks, i.e., a total of twenty five blocks. For each of the blocks, variance of luminance and variance of color difference are obtained by the left eye image measurement portion 121a and the right eye image measurement portion 121b. The following Table 1 to Table 3 show measurement results, by the left eye image measurement portion 121a (or the right eye image measurement portion 121b), of the luminance variance and the color difference variance in each of the blocks of the image that is divided into twenty five blocks as shown in FIG. 4. In each of the tables below, in each section, numbers above indicate numbers of the blocks, which are numbered from the upper left block (whose number is 1) to the lower right block, while numbers below indicate the luminance variance or the color difference variance in each of the blocks.

Table 1

**(Table 1: Variance of luminance)**

| | | | | |
|---|---|---|---|---|
| 1 | 2 | 3 | 4 | 5 |
| 3275.39 | 7904.39 | 3677.4 | 218.061 | 61.2344 |
| 6 | 7 | 8 | 9 | 10 |
| 9333.79 | 1804.79 | 10710.6 | 3121.7 | 2027.65 |
| 11 | 12 | 13 | 14 | 15 |
| 4225.47 | 985.811 | 10697.7 | 5104.02 | 3757.48 |
| 16 | 17 | 18 | 19 | 20 |
| 7528.92 | 4090.52 | 19421.8 | 18804.3 | 1069.09 |
| 21 | 22 | 23 | 24 | 25 |
| 4256.98 | 1634.96 | 53853.9 | 17661 | 2289.64 |

Table 2

**(Table 2: Variance of color difference (Cb))**

| | | | | |
|---|---|---|---|---|
| 1 | 2 | 3 | 4 | 5 |
| 14.8788 | 9.80628 | 2.84424 | 2.92616 | 1.02715 |
| 6 | 7 | 8 | 9 | 10 |
| 25.8062 | 11.1842 | 8 140.265 | 9 52.9425 | 10 21.3323 |
| 11 | 12 | 13 | 14 | 15 |
| 21.5558 | 14.8206 | 13 201.76 | 14 96.6705 | 15 31.0501 |
| 16 | 17 | 18 | 19 | 20 |
| 25.7481 | 12.7523 | 151.222 | 19 139.283 | 20 13.5302 |
| 21 | 22 | 23 | 24 | 25 |
| 32.7387 | 14.2374 | 258.574 | 111.755 | 10.5469 |

Table 3

**(Table 3: Variance of color difference (Cr))**

| | | | | |
|---|---|---|---|---|
| 1 | 2 | 3 | 4 | 5 |
| 3.24234 | 0.552869 | 0.550317 | 2.90032 | 1.10636 |
| 6 | 7 | 8 | 9 | 10 |
| 7.40055 | 0.976194 | 182.321 | 37.356 | 27.2501 |
| 11 | 12 | 13 | 14 | 15 |
| 42.8247 | 10.2704 | 370.758 | 170.715 | 58.6445 |
| 16 | 17 | 18 | 19 | 20 |
| 20.4895 | 4.08491 | 133.718 | 41.0134 | 18.0753 |
| 21 | 22 | 23 | 24 | 25 |
| 37.4799 | 62.7435 | 143.834 | 27.953 | 6.14921 |

It is also acceptable that the image is divided into blocks in this manner, the luminance variance and the color difference variance are obtained by the left eye image measurement portion 121a (or the right eye image measurement portion 121b), and the correction amount determination portion 123 does not perform correction amount calculation for a block whose value is less then a predetermined threshold value and performs the correction amount calculation only for a block whose value is equal to or more than the predetermined threshold value.

For example, if a block in which the luminance variance is less than 3000 is set as a non-target block of the correction amount calculation, in the above Table 1, the fourth block, the fifth block, the seventh block, the twelfth block, the twenty-second block and the twenty-fifth block are set as non-target blocks of the correction amount calculation.

For example, if a block in which the variance of color difference (Cb) is less than 20 is set as the non-target block of the correction amount calculation, in the above Table 2, the first block to the fifth block, the seventh block, the twelfth block, the seventeenth block, the twentieth block, the twenty-second block and the twenty-fifth block are set as the non-target blocks of the correction amount calculation.

For example, if a block in which the variance of color difference (Cr) is less than 20 is set as the non-target block of the correction amount calculation, in the above Table 3, the first block to the seventh block, the twelfth block, the seventeenth block and the twenty-fifth block are set as the non-target blocks of the correction amount calculation.

Note that it is also acceptable that the luminance variance and the color difference variance are obtained, and a block in which one of the luminance variance and the color difference (Cb, Cr) variance is less than a threshold value is set as the non-target block of the correction amount calculation, or a block in which both the luminance variance and the color difference (Cb, Cr) variance are less than threshold values is set as the non-target block of the correction amount calculation.

Various techniques can be adopted for correction amount calculation processing performed by the correction amount determination portion 123. For example, the correction amount may be determined such that a bias is added to each pixel without exception, or a gamma curve coefficient may be adjusted to obtain a correction amount corresponding to the color difference and the hue of each pixel. Further, when a technique is adopted in which a lockup table is referred to, the correction amount with respect to the color difference and the hue may be held in a table, and the correction amount with respect to the color difference and the hue may be set as an amount obtained by multiplying the table by a predetermined gain.

The left eye image correction portion 124a performs color correction processing on an image for the left eye, based on the correction amount determined by the correction amount determination portion 123. In a similar manner, the right eye image correction portion 124b performs the color correction processing on an image for the right eye, based on the correction amount determined by the correction amount determination portion 123. Note that it is very difficult to perfectly match the color of the image for the left eye with the color of the image for the right eye. Therefore, in the present embodiment, the color correction processing is performed by the left eye image correction portion 124a and the right eye image correction portion 124b such that a difference between the image for the left eye and the image for the right eye is smaller than a threshold value.

In the display device 100 according to the present embodiment, the image for the left eye and the image for the right eye are compared. When there is a color difference between the two images, one of the image for the left eye and the image for the right eye may be used as a reference and the other may be corrected such that its color matches the color of the reference image, or both the images may be corrected to have an intermediate color between the image for the left eye and the image for the right eye.

The structure of the video signal control portion 120 according to the embodiment of the present invention is described above with reference to FIG. 3. Note that, when the differential data is created, the comparison portion 122 shown in FIG. 3 may compare the color difference (Cb, Cr) average, the color difference (Cb, Cr) variance and the hue histogram measured by the left eye image measurement portion 121a with the color difference (Cb, Cr) average, the color difference (Cb, Cr) variance and the hue histogram measured by the right eye image measurement portion 121b, may calculate a sum of squared differences between them, and may output the sum of squared differences as the differential data.

### 1-4. Structure of the comparison portion 122

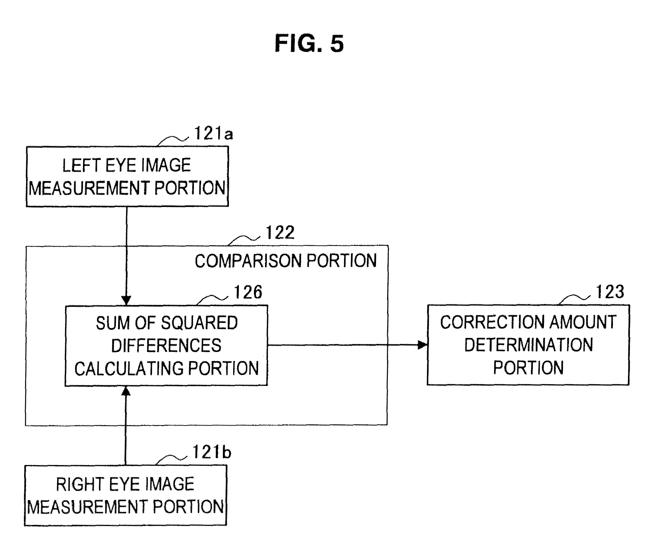

FIG. 5 is an explanatory diagram showing the structure of the comparison portion 122 that is included in the video signal control portion 120 according to the embodiment of the present invention. As shown in FIG. 5, the comparison portion 122 included in the video signal control portion 120 according to the embodiment of the present invention includes a sum of squared differences calculating portion 126.

The sum of squared differences calculating portion 126 compares the color difference (Cb, Cr) average, the color difference (Cb, Cr) variance and the hue histogram measured by the left eye image measurement portion 121a with the color difference (Cb, Cr) average, the color difference (Cb, Cr) variance and the hue histogram measured by the right eye image measurement portion 121b, and calculates the sum of squared differences between them. The sum of squared differences calculated by the sum of squared differences calculating portion 126 is transmitted to the correction amount determination portion 123 as the differential data.

### 1-5. Method of image correction

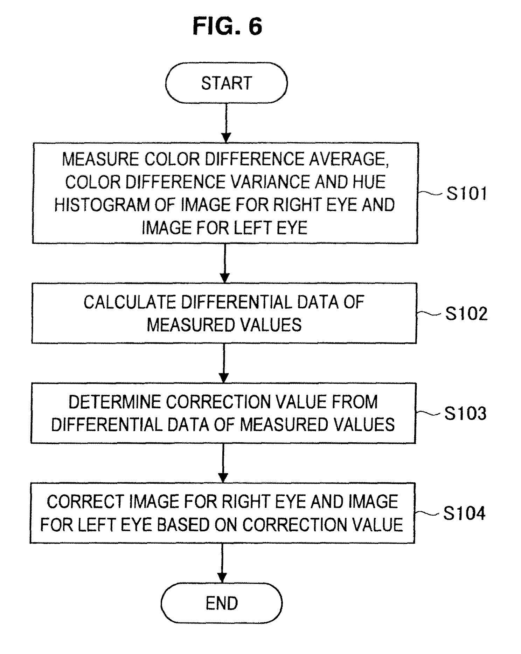

Next, an image correction method by the display device 100 according to the embodiment of the present invention will be described. FIG. 6 is a flowchart showing the image correction method by the display device 100 according to the embodiment of the present invention. Hereinafter, the image correction method by the display device 100 according to the embodiment of the present invention will be described with reference to FIG. 6.

When the display device 100 according to the embodiment of the present invention performs image correction such that the color of an image for the right eye matches the color of an image for the left eye, first, the color difference (Cb, Cr) average, the color difference (Cb, Cr) variance and the hue histogram are measured, with respect to the image for the left eye and the image for the right eye, by the left eye image measurement portion 121a and the right eye image measurement portion 121b, respectively (step S101).

When the left eye image measurement portion 121a and the right eye image measurement portion 121b measure the color difference (Cb, Cr) average, the color difference (Cb, Cr) variance and the hue histogram, with respect to the image for the left eye and the image for the right eye, respectively, the comparison portion 122 receives the measured values from the left eye image measurement portion 121a and the right eye image measurement portion 121b, and calculates differential data of the measured values (step S102). In order to obtain the differential data, differences may be simply calculated from the color difference (Cb, Cr) average, the color difference (Cb, Cr) variance and the hue histogram of the image for the left eye and the image for the right eye, and may be used as the differential data. Alternatively, a sum of squared differences between them may be calculated, and the sum of squared differences may be used as the differential data.

After the comparison portion 122 has calculated the differential or the measured values, the correction amount determination portion 123 determines, based on the differential data calculated by the comparison portion 122, a correction amount with respect to the image for the left eye and the image for the right eye (step S103). Note that, when the correction amount is determined, it may be obtained from the measurement results of the whole image, or may be obtained such that the image is divided into a plurality of blocks and the value of a particular block is weighted, as described above. Further, when the correction amount is determined by the correction amount determination portion 123, the correction amount may be determined such that a bias is added to each pixel without exception, or a gamma curve coefficient may be adjusted to obtain a correction amount corresponding to the color difference and the hue of each pixel, as described above. Further, when a technique is adopted in which the correction amount determination portion 123 refers to a lookup table, the correction amount with respect to the color difference and the hue may be held in a table, and the correction amount with respect to the color difference and the hue may be set as an amount obtained by multiplying the table by a predetermined gain.

After the correction amount determination portion 123 has determined the correction amount with respect to the image for the left eye and the image for the right eye, the color correction processing is performed on the image for the left eye and/or the image for the right eye by the left eye image correction portion 124a and/or the right eye image correction portion 124b, based on the correction amount determined by the correction amount determination portion 123 (step S104). As described above, in the present embodiment, the image for the left eye and the image for the right eye are compared. If there is a color difference between the two images, one of the image for the left eye and the image for the right eye may be used as a reference and the other may be corrected such that its color matches the color of the reference image, or both the images may be corrected to have an intermediate color between the image for the left eye and the image for the right eye.

The image correction method by the display device 100 according to the embodiment of the present invention is described above with reference to FIG. 6. Note that, in the present invention, such correction processing may be performed only once, or may be performed a plurality of times until the difference is less than a predetermined threshold value. Next, an image correction method by the display device 100 according to the embodiment of the present invention when the correction processing is performed a plurality of times will be described.

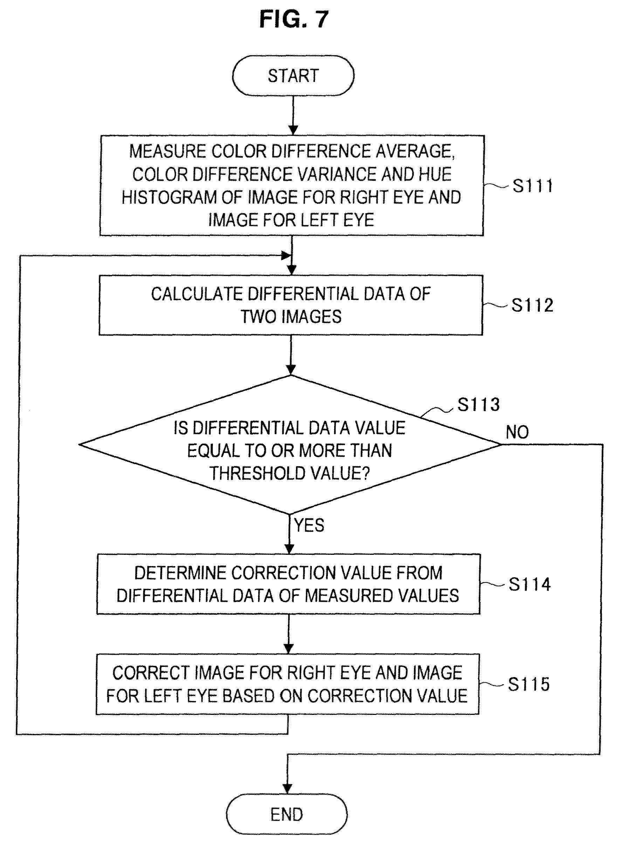

FIG. 7 is a flowchart showing the image correction method by the display device 100 according to the embodiment of the present invention when the correction processing is performed a plurality of times. Hereinafter, the image correction method by the display device 100 according to the embodiment of the present invention when the correction processing is performed a plurality of times will be described with reference to FIG. 6.

First, in a similar manner to the processing shown in FIG. 6, the left eye image measurement portion 121a and the right eye image measurement portion 121b measure the color difference (Cb, Cr) average, the color difference (Cb, Cr) variance and the hue histogram, with respect to the image for the left eye and the image for the right eye, respectively (step S111). After the left eye image measurement portion 121a and the right eye image measurement portion 121b have measured the color difference (Cb, Cr) average, the color difference (Cb, Cr) variance and the hue histogram, with respect to the image for the left eye and the image for the right eye, respectively, the comparison portion 122 calculates differential data of the measured values (step S112).

After the comparison portion 122 has calculated the differential data of the measured values, then, the correction amount determination portion 123 determines whether or not the value of the calculated differential data is equal to or more than a threshold value determined in advance (step S113). When the value of the calculated differential data is equal to or more than the threshold value determined in advance, the correction amount determination portion 123 determines, based on the differential data calculated by the comparison portion 122, a correction amount with respect to the image for the left eye and the image for the right eye (step S114).

After the correction amount determination portion 123 has determined the correction amount with respect to the image for the left eye and the image for the right eye, the left eye image correction portion 124a and the right eye image correction portion 124b perform the color correction processing on the image for the left eye and the image for the right eye, based on the correction amount determined by the correction amount determination portion 123 (step S115). After the left eye image correction portion 124a and the right eye image correction portion 124b have performed the color correction processing, the process returns to step S112 described above. At step S112, the comparison portion 122 measures the color difference average, the color difference variance and the hue histogram, with respect to the image for the left eye and the image for the right eye, and calculates differential data of measured results.

On the other hand, at step S113, when the value of the differential data calculated by the comparison portion 122 is less than the threshold value determined in advance, the process is ended without performing further processing.

The image correction method by the display device 100 according to the embodiment of the present invention when the correction processing is performed a plurality of times is described above with reference to FIG. 7. In this manner, the color difference average, the color difference variance and the hue histogram are measured with respect to the image for the left eye and the image for the right eye, the differential data of the measured results is calculated, and the correction amount is obtained with respect to the image for the left eye and the image for the right eye, based on the differential data. Thus, even when there are differences in color and brightness between the image for the left eye and the image for the right eye, it is possible to perform correction such that both the images have similar color and brightness.

Since the image for the left eye and the image for the right eye are corrected in this manner, adjustment/synchronization between cameras becomes unnecessary when three-dimensional images are captured. As a result, an improvement in image quality is expected due to reduction of flicker between the left and right images. Further, due to the reduction of the flicker between the left and right images, it is possible to generate, inside the display device, an image that can be easily viewed as a stereoscopic image. In addition, since the correction amount is calculated by dividing an image into a plurality of blocks, it is possible to maintain the color of an object of interest in the image when the user views the image as a stereoscopic image.

Note that, in the above description, the color difference average, the color difference variance, and the hue histogram are measured with respect to the image for the left eye and the image for the right eye, and the differential data of the measurement results is calculated. However, even if a luminance histogram alone is measured for the image for the left eye and the image for the right eye, it is possible to suppress the occurrence of flicker when the user views a stereoscopic image. In a description below, as a modified example of the embodiment of the present invention, a display device will be described that measures a luminance histogram for the image for the left eye and the image for the right eye, and calculates differential data, thereby suppressing the occurrence of flicker.

### 2. Modified example of embodiment of present invention

### 2-1. Structure of video signal control portion

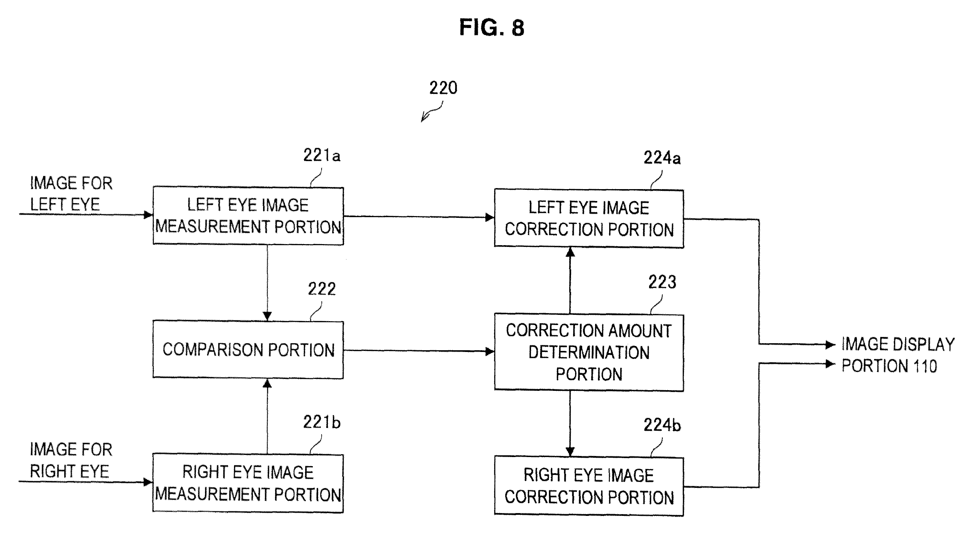

FIG. 8 is an explanatory diagram showing the structure of a video signal control portion 220 that is a modified example of the video signal control portion 120 according to the embodiment of the present invention. Hereinafter, the structure of the video signal control portion 220 that is the modified example of the video signal control portion 120 according to the embodiment of the present invention will be described with reference to FIG. 8.

As shown in FIG. 8, the video signal control portion 220 includes a left eye image measurement portion 221a, a right eye image measurement portion 221b, a comparison portion 222, a correction amount determination portion 223, a left eye image correction portion 224a, and a right eye image correction portion 224b.

The left eye image measurement portion 221a measures a luminance average, a luminance variance and a luminance histogram, with respect to a left eye image signal. Information of the luminance average, the luminance variance and the luminance histogram measured by the left eye image measurement portion 221a is transmitted to the comparison portion 222. Further, the left eye image signal (original image signal) used for the measurement is transmitted from the left eye image measurement portion 221a to the left eye image correction portion 224a.

Similarly to the left eye image measurement portion 221a, the right eye image measurement portion 221b measures a luminance average, a luminance variance and a luminance histogram, with respect to a right eye image signal. Information of the luminance average, the luminance variance and the luminance histogram measured by the right eye image measurement portion 221b is transmitted to the comparison portion 222. Further, the right eye image signal (original image signal) used for the measurement is transmitted from the right eye image measurement portion 221b to the right eye image correction portion 224b.

The comparison portion 222 compares the luminance average, the luminance variance and the luminance histogram measured by the left eye image measurement portion 221a with the luminance average, the luminance variance and the luminance histogram measured by the right eye image measurement portion 221b, and thereby generates differential data between the left eye image signal and the right eye image signal. The differential data generated by the comparison portion 222 is transmitted to the correction amount determination portion 223.

The correction amount determination portion 223 determines a correction amount using the differential data that is transmitted from the comparison portion 222 and that is generated as a result of comparing the luminance average, the luminance variance and the luminance histogram measured by the left eye image measurement portion 221a with the luminance average, the luminance variance and the luminance histogram measured by the right eye image measurement portion 221b. When the correction amount determination portion 223 determines the correction amount, the correction amount determination portion 223 may determine it by calculating the correction amount from the differential data, may determine it by referring to a lookup table from the differential data, or may determine it using another technique. Information of the correction amount determined by the correction amount determination portion 223 is transmitted to the left eye image correction portion 224a and the right eye image correction portion 224b.

The correction amount determination portion 223 may obtain the correction amount from a measurement result of the whole image, for example, or may obtain the correction amount by dividing the image into a plurality of blocks and weighting the value of a particular block. When the correction amount is obtained by dividing the image into the plurality of blocks, taking account of the fact that an object of interest in the image receives light differently on the left and right sides, attention is focused on a background section where difference is essentially small. It is assumed that a difference of a background region indicates a left-right difference of the whole image, and the correction amount determination portion 223 determines the correction amount such that the left-right difference of the background region becomes small. Luminance variance is used to determine whether or not a particular region is the background region. Of the image, a region with a small variance or a region with a value that is smaller than a threshold value may be determined as the background region. Luminance data of the image may be used to determine the background region.

In this modified example, the image may be divided into a plurality of blocks as shown in FIG. 4, and the luminance variance may be obtained by the left eye image measurement portion 221a and the right eye image measurement portion 221b. The correction amount determination portion 223 may perform correction amount calculation for only a block whose value is equal to or more than a predetermined threshold value, without performing the correction amount calculation for a block whose value is less than the predetermined threshold value.

For example, if a block in which the luminance variance is less than 3000 is set as a non-target block of the correction amount calculation, in the above Table 1, the fourth block, the fifth block, the seventh block, the twelfth block, the twenty-second block and the twenty-fifth block are set as non-target blocks of the correction amount calculation.

Similarly to the above-described correction amount determination portion 123, various techniques can be adopted for correction amount calculation processing performed by the correction amount determination portion 223. For example, the correction amount may be determined such that a bias is added to each pixel without exception, or a gamma curve coefficient may be adjusted to obtain a correction amount corresponding to the luminance of each pixel. Further, when a technique is adapted in which a lookup table is referred to, the correction amount with respect to the luminance may be held in a table, and the correction amount with respect to the luminance may be set as an amount obtained by multiplying the table by a predetermined gain.

The left eye image correction portion 224a performs luminance gain adjustment processing on an image for the left eye, based on the correction amount determined by the correction amount determination portion 223. In a similar manner, the right eye image correction portion 224b performs the luminance gain adjustment processing on an image for the right eye, based on the correction amount determined by the correction amount determination portion 223. Note that it is very difficult to perfectly match the luminance of the image for the left eye with the luminance of the image for the right eye. Therefore, in this modified example, the luminance gain adjustment processing is performed by the left eye image correction portion 224a and the right eye image correction portion 224b such that a difference between the image for the left eye and the image for the right eye is smaller than a threshold value.

In this modified example, the image for the left eye and the image for the right eye are compared. When there is a luminance difference between the two images, one of the image for the left eye and the image for the right eye may be used as a reference and the other may be corrected such that its luminance matches the luminance of the reference image, or both the images may be corrected to have an intermediate luminance between the image for the left eye and the image for the right eye.

The structure of the video signal control portion 220 that is the modified example of the video signal control portion 120 according to the embodiment of the present invention is described above. Note that, similarly to the above-described comparison portion 122, when the differential data is created, the comparison portion 222 shown in FIG. 8 may compare the luminance average, the luminance variance and the luminance histogram measured by the left eye image measurement portion 221a with the luminance average, the luminance variance and the luminance histogram measured by the right eye image measurement portion 221b, may calculate a sum of squared differences between them, and may output the sum of squared differences as the differential data.

### 2-2. Method of image correction

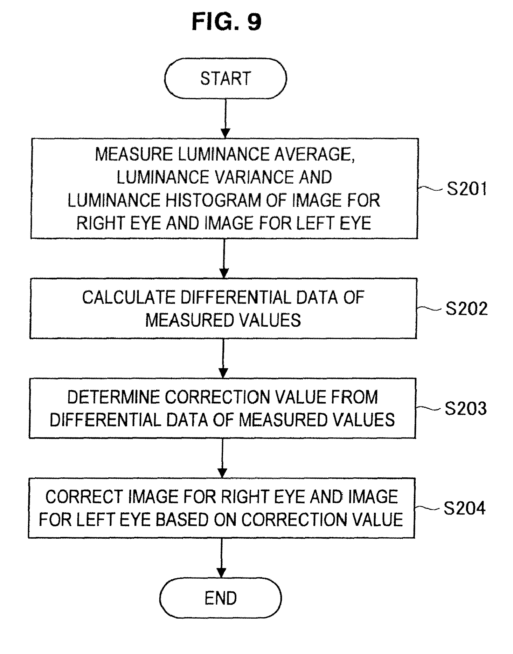

Next, an image correction method by the video signal control portion 220 that is the modified example of the video signal control portion 120 according to the embodiment of the present invention will be described. FIG. 9 is a flowchart showing the image correction method by the video signal control portion 220 that is the modified example of the video signal control portion 120 according to the embodiment of the present invention. Hereinafter, the image correction method by the video signal control portion 220 that is the modified example of the video signal control portion 120 according to the embodiment of the present invention will be described with reference to FIG. 9.

When the video signal control portion 220 according to this modified example performs correction to match the luminance of the image for the left eye with the luminance of the image for the right eye, first, the left eye image measurement portion 221a and the right eye image measurement portion 221b measure the luminance average, the luminance variance and the luminance histogram, with respect to the image for the left eye and the image for the right eye, respectively (step S201).

After the left eye image measurement portion 221a and the right eye image measurement portion 221b have measured the luminance average, the luminance variance and the luminance histogram, with respect to the image for the left eye and the image for the right eye, respectively, the comparison portion 222 calculates differential data of measured values (step S202). In order to obtain the differential data, differences may be simply calculated from the luminance average, the luminance variance and the luminance histogram of the image for the left eye and the image for the right eye, and may be used as the differential data. Alternatively, a sum of squared differences between them may be calculated, and the sum of squared differences may be used as the differential data.

After the comparison portion 222 has calculated the differential data of the measured values, the correction amount determination portion 223 determines a correction amount with respect to the image for the left eye and the image for the right eye, based on the differential data calculated by the comparison portion 222 (step S203). Note that, when the correction amount is determined, it may be obtained from the measurement results of the whole image, or may be obtained by dividing the image into a plurality of blocks and weighting the value of a particular block, as described above. Further, when the correction amount is determined by the correction amount determination portion 223, the correction amount may be determined such that a bias is added to each pixel without exception, or a gamma curve coefficient may be adjusted to obtain a correction amount corresponding to the luminance of each pixel, as described above. Further, when a technique is adopted in which the correction amount determination portion 223 refers to a lookup table, the correction amount with respect to the luminance may be held in a table, and the correction amount with respect to the luminance may be set as an amount obtained by multiplying the table by a predetermined gain.

After the correction amount determination portion 223 has determined the correction amount with respect to the image for the left eye and the image for the right eye, luminance correction processing is performed on the image for the left eye and/or the image for the right eye, by the left eye image correction portion 224a and/or the right eye image correction portion 224b, based on the correction amount determined by the correction amount determination portion 223 (step S204). As described above, in this modified example, the image for the left eye and the image for the right eye are compared. When there is a luminance difference between the two images, one of the image for the left eye and the image for the right eye may be used as a reference and the other may be corrected such that its luminance matches the luminance of the reference image, or both the images may be corrected to have an intermediate luminance between the image for the left eye and the image for the right eye.

The image correction method by the video signal control portion 220 according to the modified example of the embodiment of the present invention is described above with reference to FIG. 9. Further, in this modified example, the video signal control portion 220 may perform the correction processing only once, or may perform it a plurality of times until the difference becomes less than a predetermined threshold value.

In this manner, the luminance average, the luminance variance and the luminance histogram are measured with respect to the image for the left eye and the image for the right eye, the differential data of the measured results is calculated, and the correction amount is obtained with respect to the image for the left eye and the image for the right eye, based on the differential data. Thus, even when there is a luminance difference between the image for the left eye and the image for the right eye, it is possible to perform correction such that both the images have a similar brightness.

Since the image for the left eye and the image for the right eye are corrected in this manner, adjustment/synchronization between cameras becomes unnecessary when three- dimensional images are captured. As a result, an improvement in image quality is expected due to reduction of flicker between the left and right images. Further, due to the reduction of the flicker between the left and right images, it is possible to generate, inside the display device, an image that can be easily viewed as a stereoscopic image. In addition, since the correction amount is calculated by dividing an image into a plurality of blocks, it is possible to maintain the brightness of an object of interest in the image when the user views the image as a stereoscopic image.

Note that, in the above-described embodiment and the modified example thereof, the described display device 100 allows the viewer to view a stereoscopic image with the shutter glasses 200. However, the present invention is not limited to this example. It is needless to mention that the present invention can also be applied to a display device that allows the viewer to view a stereoscopic image without the shutter glasses 200. Further, although a series of processing described in the above-described embodiment may be performed by dedicated hardware, it may be performed by software. If the series of processing is performed by software, the series of processing can be realized by storing, inside the display device 100, a recording medium that records a computer program, and by executing the computer program by a CPU or another control device. Moreover, if the series of processing is performed by software, the series of processing can be realized by storing, inside a dedicated or multipurpose computer, a recording medium that records a computer program, and by executing the computer program by a CPU or another control device.

### 3. Conclusion

It should be understood by those skilled in the art that various modifications, combinations, sub-combinations and alterations may occur depending on design requirements and other factors insofar as they are within the scope of the appended claims or the equivalents thereof.

For example, in the above-described embodiment, when the correction amount is determined, the image is divided into a plurality of blocks, and the correction amount is determined for only a block in which the luminance variance or the color difference variance is equal to or more than the predetermined threshold value. However, the present invention is not limited to this example. For example, the image may be divided into a plurality of blocks, and the correction amount may be determined for center blocks (in the above-described embodiment, the seventh to the ninth blocks, the twelfth to the fourteenth blocks, and the seventeenth to the nineteenth blocks, for example) in which left-right parallax is small. Alternatively, after the blocks for which the correction amount is determined are limited to the center blocks, the correction amount may be further determined only for a block in which the luminance variance or the color difference variance is equal to or more than the predetermined threshold value.

Further, for example, when, as a result of analyzing the image for the left eye and the image for the right eye, a person is included in the image, the correction amount determination portion 123 or 223 may determine the correction amount so as to match the luminance and the color difference of a section corresponding to the person in the image. Further, for example, the image for the left eye and the image for the right eye may be analyzed, and the correction amount determination portion 123 or 223 may determine the correction amount in accordance with content included in the image. For example, when scenery occupies a relatively large area of the image, the correction amount determination portion 123 or 223 may determine the correction amount so as to match the luminance and the color difference of a section corresponding to the scenery in the image. Furthermore, when a person occupies a relatively large area of the image, the correction amount determination portion 123 or 223 may determine the correction amount so as to match the luminance and the color difference of a section corresponding to the person.

Moreover, for example, when, as a result of analyzing the image for the left eye and the image for the right eye, the images are computer graphics or something like that, the correction amount determination potion 123 or 223 may omit calculation of the correction amount so as not to perform correction.
The present application contains subject matter related to that disclosed in Japanese Priority Patent Application JP 2009-186789 filed in the Japan Patent Office on August 11, 2009.

## Claims

1. A display device comprising:
a first measurement portion (121a; 221a) that measures information relating to luminance of a first image signal, and outputs a first measurement result;
a second measurement portion (121b; 221b) that measures information relating to luminance of a second image signal, and outputs a second measurement result;
a comparison portion (122; 222) that compares the first measurement result with the second measurement result and outputs differential data;
a correction amount determination portion (123; 223) that determines, based on the differential data, a correction amount for at least one of the first image signal and the second image signal; and
a correction portion (124a, 124b; 224a, 224b) that corrects, based on the correction amount, the luminance of at least one of the first image signal and the second image signal.

2. The display device according to claim 1,
wherein the first measurement portion (121a; 221a) additionally measures information relating to color of the first image signal and outputs the first measurement result, and the second measurement portion (121b; 221b) additionally measures information relating to color of the second image signal and outputs the second measurement result.

3. The display device according to claim 1 or 2,
wherein the first measurement portion (121a; 221a) and the second measurement portion (121b; 221b) respectively divide the first image signal and the second image signal into a plurality of regions, and perform measurement with respect to each of the regions.

4. The display device according to claim 3,
wherein the correction amount determination portion (123; 223) determines a correction amount only for the region in which the first measurement result and the second measurement result are equal to or more than a threshold value determines in advance.

5. The display device according to claim 3,
wherein the correction amount determination portion (123; 223) determines a correction amount only for a region corresponding to a central section in the plurality of regions.

6. The display according to claim 5,
wherein the correction amount determination portion (123; 223) further determines a correction amount only for the region in which the first measurement result and the second measurement result are equal to or more than a threshold value determined in advance.

7. The display device according to claim 1,
wherein the comparison portion (122) outputs, as differential data, a sum of squared differences between the first measurement result and the second measurement result.

8. The display device according to claim 1,
wherein the correction amount determination portion (123; 223) determines a correction amount in accordance with content of an image displayed by the first image signal and the second image signal.

9. The display device according to claim 1, further comprising:
a display portion (110) that displays a three-dimensional image based on the first image signal and the second image signal that have been corrected.

10. A display method comprising the steps of:
measuring information relating to luminance of a first image signal, and outputting a first measurement result;
measuring information relating to luminance of a second image signal, and outputting a second measurement result;
comparing the first measurement result with the second measurement result and outputting differential data;
determining, based on the differential data, a correction amount for at least one of the first image signal and the second image signal; and
correcting, based on the correction amount, the luminance of at least one of the first image signal and the second image signal.

11. A computer program comprising instructions that command a computer to perform the steps of:
measuring information relating to luminance of a first image signal, and outputting a first measurement result;
measuring information relating to luminance of a second image signal, and outputting a second measurement result;
comparing the first measurement result with the second measurement result and outputting differential data;
determining, based on the differential data, a correction amount for at least one of the first image signal and the second image signal; and
correcting, based on the correction amount, the luminance of at least one of the first image signal and the second image signal.
